# EUROPÄISCHE PATENTSCHRIFT

(11) **EP 4 080 236 B1**
(45) Veröffentlichungstag und Bekanntmachung des Hinweises auf die Patenterteilung: **29.04.2026**
(21) Anmeldenummer: 22163406.6
(22) Anmeldetag: 22.03.2022
(51) Int. Cl.: H01Q 1/22, G01S 7/02, G01S 13/04, G01S 13/86, G01S 13/87, G01S 13/88, H01Q 19/06, H01Q 3/01, H01Q 3/14, H01Q 25/00

(54) **RADARMODUL FÜR BELEUCHTUNGSANLAGEN**
RADAR MODULE FOR LIGHTING INSTALLATIONS
MODULE RADAR POUR INSTALLATIONS D'ÉCLAIRAGE

(30) Priorität: 22.04.2021 DE 102021110183
(43) Veröffentlichungstag der Anmeldung: 26.10.2022
(73) Patentinhaber: Tridonic GmbH & Co. KG, 6851 Dornbirn (AT)
(72) Erfinder: Kistler, Roger, 6850 Dornbirn (AT); Künzli, Markus, 6850 Dornbirn (AT)
(74) Vertreter: Rupp, Christian

(56) Entgegenhaltungen:
- DE-A1- 102019 122 612
- DE-U1- 20 302 167
- US-A- 5 926 127
- US-A1- 2009 237 509

## Beschreibung

Die Erfindung betrifft ein Radarmodul für eine Beleuchtungsanlage.

### Technisches Gebiet

Radarsensoren können zur Ansteuerung von Beleuchtungsanalgen genutzt werden, wobei die Radarsensoren Objekte, wie zum Beispiel Personen, erfassen und anhand des Signals des Radarsensors die Funktion der Beleuchtungsanlage steuern können. So kann ein Radarsensor oder ein Radarmodul bestehend aus mehreren Radarsensoren Signale an die Steuerungseinheit der Beleuchtungsanlage abgeben und so die Leuchten der Beleuchtungsanlage bei An-/Abwesenheit eines Objekts ein-/ausschalten, dimmen etc.

### Stand der Technik

Gemäß dem Stand der Technik weisen Beleuchtungsanlagen bereits Radarsensoren auf. Allerdings ist der Erfassungsbereich dieser Radarsensoren fest eingestellt und kann nur durch eine Veränderung der Sensitivität auf den Anwendungsbereich angepasst werden, was die Möglichkeiten zur Nutzung von Radarsensoren zur Ansteuerung von Beleuchtungsanalgen limitiert. DE20302167U1 offenbart einen Bewegungsmelder, der mit einer optischen und/oder akustischen Alarmeinrichtung verbunden ist, und der die Gestalt eines transportablen Gebrauchsgegenstandes hat.

### Darstellung der Erfindung

Es ist die Aufgabe der vorliegenden Erfindung, ein Radarmodul für eine Beleuchtungsanlage bereitzustellen.

Diese Aufgabe wird mittels der Merkmalen des Anspruchs 1 gelöst. Die Erfindung wird durch die Merkmale der abhängigen Patentansprüche weitergebildet.

Der Radarsensor enthält bevorzugt eine Radardetektoreinheit und ist bevorzugt mit einem Linsenmodul für Radarstrahlen versehen ist, welches ausgewechselt werden kann, um den Erfassungsbereich des Radarsensors anzupassen.

Unter einer Radardetektoreinheit wird hierbei eine Detektoreinheit verstanden, welches in der Lage ist, Radarstrahlung zu detektieren und ein Signal abhängig von der Intensität der detektierten Radarstrahlung zu erzeugen.

Unter einem Linsenmodul für Radarstrahlen wird hierbei ein Linsenmodul verstanden, welches in der Lage ist, Radarstrahlung zu brechen und, abhängig von der Form des Linsenmoduls, Radarstrahlung unterschiedlich zu fokussieren.

Das Linsenmodul ist bevorzugt so geformt, dass es eine kreisförmige Kontur des Erfassungsbereichs des Radarsensors bereitstellt.

Das Linsenmodul ist weiterhin bevorzugt so geformt, dass es eine ovale Kontur des Erfassungsbereichs des Radarsensors bereitstellt, wobei die ovale Kontur bevorzugt hochkant im Raum angeordnet ist. Eine hochkant im Raum angeordnete Kontur ist insbesondere für die Anwendung in Korridoren, wie zum Beispiel in Korridoren zwischen Hochregallagern, geeignet und kann in solch einem speziellen Anwendungsfall eine effizientere Erfassung eines Objekts ermöglichen, als es eine kreisförmige Kontur erlaubt.

Das Linsenmodul erlaubt vorzugsweise durch unterschiedliche Ausformung eine Anpassung des Abstands zwischen Radardetektoreinheit und Linsenmodul. Eine unterschiedliche Dicke des Linsenmoduls erlaubt beispielsweise eine Anpassung des effektiven Abstands zwischen der Brechungsebene des Linsenmoduls und der Radardetektoreinheit und so die Anpassung der Detektionsfläche an den jeweiligen Einsatzbereich und/oder Standort des Radarsensors.

Die Aufnahmevorrichtung des Linsenmoduls erlaubt bevorzugter Weise ein Auswechseln des Linsenmoduls durch eine Steckverbindung, eine Schraubverbindung oder eine ineinandergreifende Halteverbindung.

Unter dem Auswechseln des Linsenmoduls wird hierbei ein reversibler und zerstörungsfreier Austausch des Linsenmoduls verstanden.

Für einen Radarsensor werden somit mehrere unterschiedliche Linsenmodule bereitgestellt, welche entfernbar befestigt sind. Ein einfaches Auswechseln des Linsenmoduls ermöglicht somit eine schnelle und simple Anpassung des gewünschten Erfassungsbereichs des Radarsensors an den jeweiligen Einsatzbereich und/oder Standort.

Die Aufnahmevorrichtung des Linsenmoduls verfügt weiterhin bevorzugt über eine Einstellvorrichtung, welche eine Anpassung des Abstands, beispielsweise durch Drehung eines Gewindes, zwischen Radardetektoreinheit und Linsenmodul ermöglicht. Eine Anpassung des Abstands zwischen Radardetektoreinheit und Linsenmodul ermöglicht eine Veränderung der erfassten Detektionsfläche des Radarsensors, und erlaubt so die Anpassung der Detektionsfläche an den jeweiligen Einsatzbereich und/oder Standort des Radarsensors.

Die Erfindung umfasst ein Radarmodul für eine Beleuchtungsanlage, wobei abhängig von dem Signal des Radarmoduls die Helligkeit der Beleuchtungsanlage gesteuert werden kann, welches dadurch gekennzeichnet ist, dass das Radarmodul wenigstens zwei Radarsensoren enthält, welche über eine Steuerungseinheit für Radarsensoren miteinander verbunden sind.

Unter einer Steuerungseinheit für Radarsensoren wird hierbei ein elektrisches oder elektronisches, bevorzugt ein elektronisches, Bauteil verstanden, welches die Signale von wenigstens zwei Radarsensoren verarbeiten und daraus ein einziges, gemeinsames Signal erzeugen kann, um die Helligkeit der Beleuchtungsanlage zu steuern.

Das Radarmodul enthält wenigstens zwei Radarsensoren, welche sich hinsichtlich der Kontur des Erfassungsbereichs unterscheiden. Die Kombination von wenigstens zwei Radarsensoren mit unterschiedlichen Erfassungsbereichen erlaubt eine weitreichende Anpassung der Detektionsfläche des Radarmoduls an den jeweiligen Einsatzbereich und/oder Standort.

Ein Ausführungsbeispiel umfasst weiterhin eine Beleuchtungsanlage. Die Beleuchtungsanlage umfasst wenigstens eine Leuchte, bevorzugt zwei oder mehr Leuchten, sowie ein Radarmodul. Die wenigstens eine Leuchte ist optional mit einer Steuerungseinheit für Beleuchtungsanlagen verbunden, welche mit einem Radarsensor oder einem Radarmodul in Kommunikation steht.

Eine Veränderung des Signals des Radarsensors oder des Radarmoduls kann dadurch hervorgerufen werden, dass sich ein Objekt, beispielsweise eine Person oder ein Fahrzeug, in den Erfassungsbereich bewegt. Eine Veränderung eines solchen Bewegungs-Erfassungssignals kann von der Steuerungseinheit für Beleuchtungsanlagengenutzt werden, um die wenigstens eine Leuchte der Beleuchtungsanlage bei An-/Abwesenheit eines Objekts ein-/ausschalten oder die Helligkeit der wenigstens eine Leuchte zu regulieren.

Die wenigstens eine Leuchte der Beleuchtungsanlage kann dabei drahtlos oder drahtgebunden (beispielsweise über einen Bus wie bspw. einen DALI-Bus), vorzugsweise drahtlos, mit dem Radarsensor oder Radarmodul in Kommunikation stehen
Ist die wenigstens eine Leuchte mit einer Steuerungseinheit für Beleuchtungsanlagen verbunden, steht die Steuerungseinheit für Beleuchtungsanlagen dabei drahtlos oder drahtgebunden (beispielsweise über einen Bus wie bspw. einen DALI-Bus), vorzugsweise drahtlos, mit dem Radarsensor oder Radarmodul in Kommunikation.

In einer bevorzugten Ausführungsform kann ein erfindungsgemäßes Radarmodul auch in das Gehäuse einer Leuchte integriert sein und mit einer Steuereinrichtung der Leuchte zu kommunizieren, um die Leuchte beispielsweise ein-/auszuschalten oder deren Helligkeit zu regulieren.

In einer bevorzugten Ausführungsform einer Beleuchtungsanlage können mehrere Leuchten, welche jeweils über einen integrierten Radarsensor oder ein integriertes Radarmodul verfügen, drahtlos oder drahtgebunden (beispielsweise über einen Bus wie bspw. einen DALI-Bus), optional über eine Steuerungseinheit für Beleuchtungsanlagen, miteinander verbunden sein, so dass sie ein System bilden.

Nachfolgend soll die Erfindung anhand der beigefügten Zeichnungen näher erläutert werden. Es zeigen:
**Fig. 1, Fig. 2** und **Fig. 4** zeigen Ausgestaltungen eines Radarsensors **1.**
**Fig. 3** zeigt Ausgestaltungen eines Linsenmoduls **3.**
**Fig. 5** zeigt die Ausgestaltung eines erfindungsgemäßen Radarmoduls **8.**
**Fig. 6** und **Fig. 7** zeigen Ausgestaltungen einer Beleuchtungsanlage **10.**

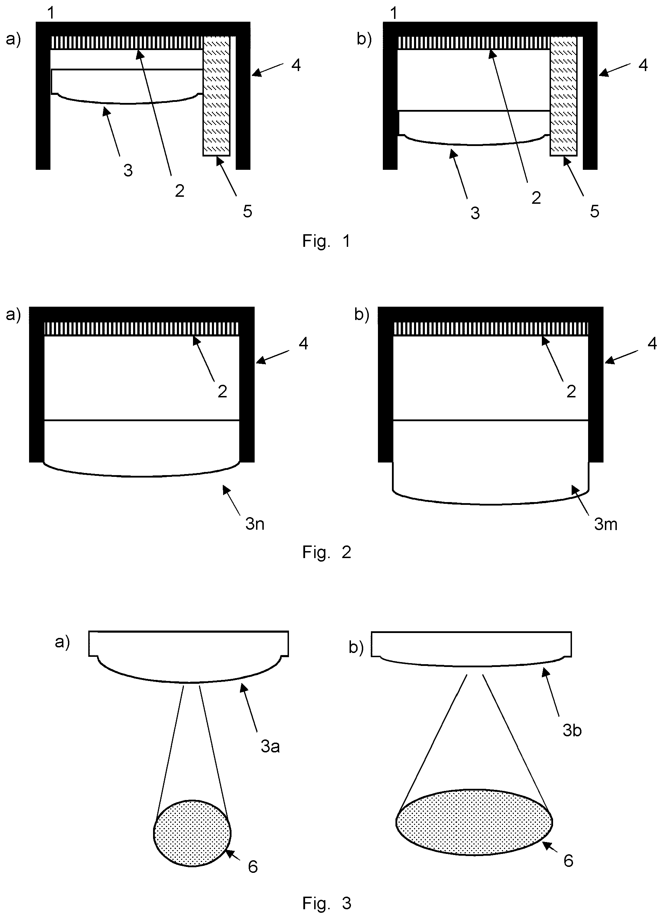

Der in **Fig. 1** gezeigte Radarsensor **1** weist eine Radardetektoreinheit **2,** ein Linsenmodul **3** sowie eine Aufnahmevorrichtung für das Linsenmodul **4** (als Beispiele für eine Radaroptik) auf. Weiterhin ist eine Einstellvorrichtung **5** vorhanden, welche eine Veränderung des Abstands zwischen der Radardetektoreinheit **2** und dem Linsenmodul **3** ermöglicht. Die Veränderung des Abstands zwischen der Radardetektoreinheit **2** und dem Linsenmodul **3** wird im Falle des abgebildeten Radarsensors der **Fig. 1** durch eine relative Drehung und mittels einer Gewindeverbindung realisiert. **Fig. 1a** zeigt einen geringeren Abstand, während **Fig. 1b** einen größeren Abstand zwischen der Radardetektoreinheit **2** und dem Linsenmodul **3** zeigt.

**Fig. 2** zeigt zwei unterschiedliche Ausgestaltungen erfindungsgemäßer Linsenmodule **3n** und **3m** zur Anpassung des effektiven Abstands zwischen der Brechungsebene des Linsenmoduls **3** und der Radardetektoreinheit **2.** Diese Ausführungsform ermöglicht es, zwischen einem festen geringeren Abstand **(****Fig. 2a****)** und einem festen weiteren Abstand **(****Fig. 2b****)** zu wählen. Die Linsenmodule in Fig. **2a** und Fig. **2b** decken unterschiedliche Erfassungsbereiche ab. Sie sind also austauschbar mit der Radardetektoreinheit **2** verbunden, beispielsweise Mittels Verschraubung, Bajonett, Aufstecken etc

**Fig. 3** zeigt zwei unterschiedliche Ausgestaltungen eines erfindungsgemäßen Linsenmoduls **3** zur Anpassung des Erfassungsbereichs **6** des Radarsensors. Die in **Fig. 3a** abgebildete Form des Linsenmoduls weist einen kreisförmigen Erfassungsbereich **6** auf, während die in **Fig. 3b** abgebildete Form des Linsenmoduls einen ovalen Erfassungsbereich **6** aufweist. Wiederum decken die Linsenmodule in Fig. 3a und Fig. 3b unterschiedliche Erfassungsbereiche ab. Sie sind also daher austauschbar mit der Radardetektoreinheit 2 verbunden, beispielsweise Mittels Verschraubung, Bajonett, Aufstecken etc.

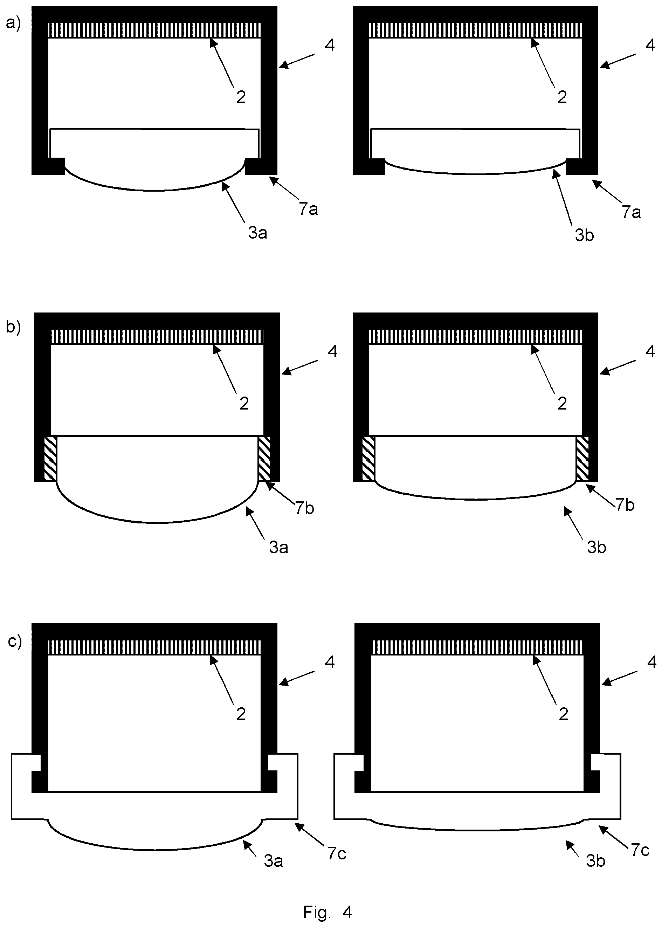

Die in **Fig. 4** gezeigten Ausgestaltungen eines Radarsensors **1** verdeutlichen die unterschiedlichen Möglichkeiten, ein Linsenmodul **3** mit einer Aufnahmevorrichtung für das Linsenmodul **4** zu verbinden, wobei die Verbindungsmöglichkeit ein Auswechseln des Linsenmoduls **(3)** durch eine Steckverbindung **7a (****Fig. 4a****),** eine Schraubverbindung oder Bajonettverbindung **7b (****Fig. 4b****)** oder eine ineinandergreifende Halteverbindung **7c (****Fig. 4c****)** erlaubt. Die in **Fig. 4** gezeigten Ausgestaltungen sind hierbei für zwei unterschiedliche Geometrien des Linsenmoduls **3a** und **3b** gezeigt.

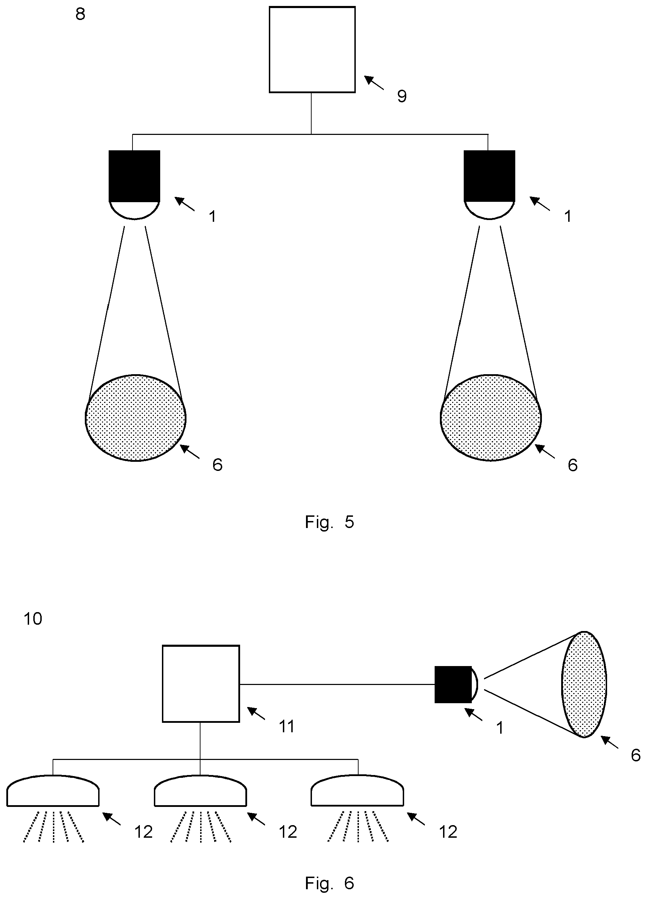

**Fig. 5** zeigt ein Beispiel für ein erfindungsgemäßes Radarmodul **8,** bestehend aus zwei Radarsensoren **1** mit zugehörigen Erfassungsbereichen **6,** welche über eine Steuerungseinheit für Radarsensoren **9** miteinander verbunden sind.

Die in **Fig. 6** gezeigte Beleuchtungsanlage **10** weist einen Radarsensor **1** (beispielsweise mit ovalem Erfassungsbereich) auf, welcher drahtlos oder drahtgebunden (beispielsweise über einen Bus wie bspw. einen DALI-Bus) ein Bewegungs-Erfassungssignal an eine Steuerungseinheit für Beleuchtungsanlagen **11** sendet. Dieses Signal wird von der Steuerungseinheit für Beleuchtungsanlagen **11** verarbeitet und genutzt, um beispielsweise (hier: drei) Leuchten **12** anzusteuern und beispielsweise die drei Leuchten **12** ein-/auszuschalten oder deren Helligkeit zu regulieren.

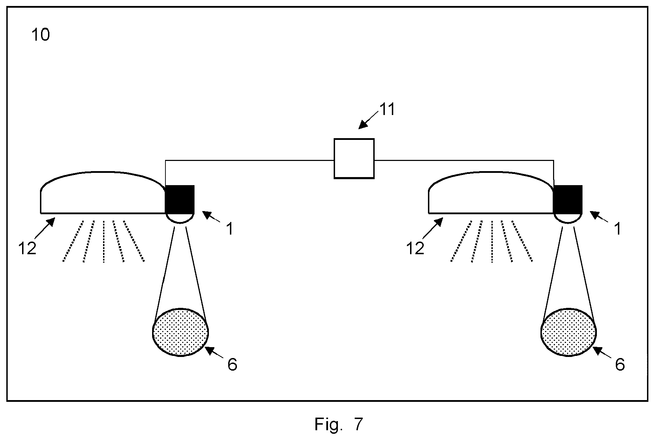

Die in **Fig. 7** gezeigte Beleuchtungsanlage **10** weist zwei Radarsensoren **1** (beispielsweise mit rundem Erfassungsbereich) auf, welche in je in das Gehäuse einer Leuchte **12** integriert sind und diese Leuchte ansteuern um die Leuchte beispielsweise ein-/auszuschalten oder deren Helligkeit zu regulieren und dabei drahtlos oder drahtgebunden (beispielsweise über einen Bus wie bspw. einen DALI-Bus) über eine Steuerungseinheit für Beleuchtungsanlagen **11** miteinander verbunden sind.

## Patentansprüche

1. Radarmodul **(8)** für eine Beleuchtungsanlage **(10),** wobei abhängig von einem Signal des Radarmoduls eine Helligkeit der Beleuchtungsanlage gesteuert werden kann, wobei das Radarmodul **(8)** wenigstens zwei Radarsensoren **(1)** enthält, welche über eine Steuerungseinheit für Radarsensoren **(9)** miteinander verbunden sind, wobei sich die wenigstens zwei Radarsensoren **(1)** hinsichtlich der Kontur eines Erfassungsbereichs **(6)** unterscheiden, wobei jeder der wenigsten zwei Radarsensoren **(1)** einen bestimmten Erfassungsbereich **(6)** überwacht und abhängig von den Signalen der Radarsensoren **(1)** die Helligkeit der Beleuchtungsanlage **(10)** gesteuert werden kann, wobei der jeweilige Erfassungsbereich **(6)** durch Veränderung einer dem jeweiligen Radarsensor vorgesetzten Radaroptik verstellbar ist.

2. Radarmodul **(8)** für eine Beleuchtungsanlage **(10)** nach Anspruch 1, wobei die Form des jeweiligen Erfassungsbereichs **(6)** durch Veränderung der Radaroptik anpassbar ist.

3. Radarmodul **(8)** für eine Beleuchtungsanlage **(10)** nach Anspruch 1 oder 2, wobei jeder Radarsensor **(1)** eine Radardetektoreinheit **(2)** enthält und ein Linsenmodul **(3)** als Radaroptik aufweist, welches ausgewechselt werden kann, um den Erfassungsbereich des jeweiligen Radarsensors **(6)** anzupassen.

4. Radarmodul **(8)** für eine Beleuchtungsanlage **(10)** nach Anspruch 3, wobei das Linsenmodul **(3)** eine kreisförmige Kontur des Erfassungsbereichs des jeweiligen Radarsensors **(6)** bereitstellt.

5. Radarmodul (**8**) für eine Beleuchtungsanlage **(10)** nach einem der Ansprüche 3 und 4, wobei das Linsenmodul **(3)** eine ovale Kontur des Erfassungsbereichs des jeweiligen Radarsensors **(6)** bereitstellt.

6. Radarmodul (**8**) für eine Beleuchtungsanlage **(10)** nach einem der Ansprüche 3 bis 5, wobei unterschiedlich ausgeformte Linsenmodule **(3)** eine Anpassung des Abstands zwischen Radardetektoreinheit **(2)** und Linsenmodul **(3)** ermöglichen.

7. Radarmodul (**8**) für eine Beleuchtungsanlage **(10)** nach einem der Ansprüche 3 bis 6, wobei eine Aufnahmevorrichtung des Linsenmoduls **(4)** ein Auswechseln des Linsenmoduls **(3)** durch eine Steckverbindung **(7a),** eine Schraubverbindung **(7b)** oder eine ineinandergreifende Halteverbindung **(7c)** erlaubt.

8. Radarmodul **(8)** für eine Beleuchtungsanlage **(10)** nach Anspruch 7, wobei die Aufnahmevorrichtung des Linsenmoduls **(4)** über eine Einstellvorrichtung **(5)** verfügt, welche eine Anpassung des Abstands zwischen Radardetektoreinheit **(2)** und Linsenmodul **(3)** ermöglicht.

9. Beleuchtungsanlage **(10),** aufweisend wenigstens eine Leuchte **(12),** welche mit einer Steuerungseinheit für Beleuchtungsanlagen **(11)** verbindbar ist, und ferner aufweisend und in Kommunikation stehend mit einem Radarmodul **(8)** gemäß einem der Ansprüche 1 bis 8.

10. Beleuchtungsanlage **(10)** nach Anspruch 9, wobei die wenigstens eine Leuchte **(12)** drahtlos mit dem Radarmodul **(8)** in Kommunikation steht.

11. Beleuchtungsanlage **(10)** nach Anspruch 10, wobei die Steuerungseinheit für Beleuchtungsanlagen **(11)** der wenigstens einen Leuchte **(12)** drahtlos mit dem Radarmodul **(8)** in Kommunikation steht.

12. Beleuchtungsanlage **(10),** aufweisend wenigstens eine Leuchte **(12),** wobei ein Radarmodul **(8)** gemäß der Ansprüche 1 bis 8 in die wenigstens eine Leuchte integriert ist und diese Leuchte ansteuern kann um die Leuchte ein- oder auszuschalten oder deren Helligkeit zu regulieren.

13. Beleuchtungsanlage **(10)** nach Anspruch 12, wobei die Beleuchtungsanlage **(10)** wenigstens zwei Leuchten mit integriertem Radarmodul **(8)** enthält, welche über eine Steuerungseinheit für Beleuchtungsanlagen **(11)** drahtlos miteinander in Kommunikation stehen.

## Claims

1. **Radar module (8) for a lighting installation (10),** wherein a brightness of the lighting installation can be controlled based on a signal of the radar module, the radar module (8) comprising at least two radar sensors (1) that are interconnected via a control unit (9) for radar sensors, wherein the at least two radar sensors (1) differ from each other in terms of the contour of a detection area (6), each of the at least two radar sensors (1) monitors a specific detection area (6) and the brightness of the lighting installation (10) is controllable based on signals from the radar sensors (1), and wherein the respective detection area (6) is adjustable by altering a radar optics arranged in front of the respective radar sensor.

2. **Radar module (8) for a lighting installation (10) according to claim** 1, wherein the shape of the respective detection area (6) is adaptable by changing the radar optics.

3. **Radar module (8) for a lighting installation (10) according to claim 1 or 2,** wherein each radar sensor (1) comprises a radar detector unit (2) and has a lens module (3) as radar optics, the lens module (3) being replaceable in order to adapt the detection area (6) of the respective radar sensor.

4. **Radar module (8) for a lighting installation (10) according to claim 3,** wherein the lens module (3) provides a detection area (6) of circular contour for the respective radar sensor.

5. **Radar module (8) for a lighting installation (10) according to claim 3 or 4,** wherein the lens module (3) provides a detection area (6) of oval contour for the respective radar sensor.

6. **Radar module (8) for a lighting installation (10) according to one of claims 3 to 5,** wherein differently shaped lens modules (3) allow an adjustment of the distance between the radar detector unit (2) and the lens module (3).

7. **Radar module (8) for a lighting installation (10) according to one of claims 3 to 6,** wherein a receptacle (4) for the lens module allows the lens module (3) to be replaced by a plug connection (7a), a screw connection (7b), or an interlocking retaining connection (7c).

8. **Radar module (8) for a lighting installation (10) according to claim 7,** wherein the receptacle (4) of the lens module has an adjusting device (5) which enables adjustment of the distance between the radar detector unit (2) and the lens module (3).

9. **Lighting installation (10),** comprising at least one luminaire (12) that is connectable to a control unit (11) for lighting installations, and further comprising a radar module (8) according to any one of claims 1 to 8, which is in communication with said at least one luminaire.

10. **Lighting installation (10) according to claim 9,** wherein the at least one luminaire (12) is in wireless communication with the radar module (8).

11. **Lighting installation (10) according to claim 10,** wherein the control unit (11) for lighting installations of the at least one luminaire (12) is in wireless communication with the radar module (8).

12. **Lighting installation (10),** comprising at least one luminaire (12), wherein a radar module (8) according to any one of claims 1 to 8 is integrated into said at least one luminaire and is configured to control the luminaire to switch it on or off or to regulate its brightness.

13. **Lighting installation (10) according to claim 12,** wherein the lighting installation (10) comprises at least two luminaires (12) each with an integrated radar module (8), which are in wireless communication with each other via a control unit (11) for lighting installations.

## Revendications

1. **Module radar (8) pour une installation d'éclairage (10),** dans lequel l'intensité lumineuse de l'installation d'éclairage peut être commandée en fonction d'un signal dudit module radar, le module radar (8) comprenant au moins deux capteurs radar (1) connectés l'un à l'autre via une unité de commande de capteurs radar (9), lesdits au moins deux capteurs radar (1) se distinguant l'un de l'autre par la forme du contour d'une zone de détection (6), chaque capteur radar (1) parmi lesdits au moins deux capteurs radar surveillant une zone de détection spécifique (6) et l'intensité lumineuse de l'installation d'éclairage (10) pouvant être commandée en fonction des signaux des capteurs radar (1), la zone de détection (6) respective pouvant être ajustée par modification d'une optique radar disposée devant le capteur radar respectif.

2. **Module radar (8) pour une installation d'éclairage (10) selon la revendication 1,** dans lequel la forme de la zone de détection (6) respective est adaptable par modification de l'optique radar.

3. **Module radar (8) pour une installation d'éclairage (10) selon la revendication 1 ou 2,** dans lequel chaque capteur radar (1) comprend une unité de détection radar (2) et comporte un module de lentille (3) faisant office d'optique radar, ledit module de lentille (3) étant remplaçable afin d'adapter la zone de détection (6) du capteur radar respectif.

4. **Module radar (8) pour une installation d'éclairage (10) selon la revendication 3,** dans lequel le module de lentille (3) fournit un contour circulaire pour la zone de détection (6) du capteur radar respectif.

5. **Module radar (8) pour une installation d'éclairage (10) selon l'une des revendications 3 ou 4,** dans lequel le module de lentille (3) fournit un contour ovale pour la zone de détection (6) du capteur radar respectif.

6. **Module radar (8) pour une installation d'éclairage (10) selon l'une des revendications 3 à 5,** dans lequel des modules de lentille (3) de formes différentes permettent d'ajuster la distance entre l'unité de détection radar (2) et le module de lentille (3).

7. **Module radar (8) pour une installation d'éclairage (10) selon l'une des revendications 3 à 6,** dans lequel un dispositif de réception (4) du module de lentille permet le remplacement du module de lentille (3) par un raccord enfichable (7a), un raccord vissé (7b) ou une liaison de retenue à enclenchement (7c).

8. **Module radar (8) pour une installation d'éclairage (10) selon la revendication 7,** dans lequel le dispositif de réception (4) du module de lentille comporte un dispositif de réglage (5) permettant d'ajuster la distance entre l'unité de détection radar (2) et le module de lentille (3).

9. **Installation d'éclairage (10),** comprenant au moins un luminaire (12) pouvant être connecté à une unité de commande pour installations d'éclairage (11), et comprenant en outre un module radar (8) selon l'une des revendications 1 à 8, en communication avec ledit luminaire (12).

10. **Installation d'éclairage (10) selon la revendication 9,** dans laquelle ledit au moins un luminaire (12) communique sans fil avec le module radar (8).

11. **Installation d'éclairage (10) selon la revendication 10,** dans laquelle l'unité de commande d'installation d'éclairage (11) dudit au moins un luminaire (12) communique sans fil avec le module radar (8).

12. **Installation d'éclairage (10),** comprenant au moins un luminaire (12), dans lequel un module radar (8) selon l'une des revendications 1 à 8 est intégré audit luminaire (12) et est apte à commander celui-ci pour allumer ou éteindre le luminaire ou pour en réguler la luminosité.

13. **Installation d'éclairage (10) selon la revendication 12,** dans laquelle l'installation d'éclairage (10) comprend au moins deux luminaires (12) dotés chacun d'un module radar (8) intégré, lesquels communiquent sans fil entre eux via une unité de commande d'installation d'éclairage (11).
